# EUROPÄISCHE PATENTSCHRIFT

(11) **EP 0 835 391 B1**
(45) Veröffentlichungstag und Bekanntmachung des Hinweises auf die Patenterteilung: **11.08.1999**
(21) Anmeldenummer: 95906947.7
(22) Anmeldetag: 13.01.1995
(51) Int. Cl.: F16C 17/03, F16C 33/20, B29C 45/26

(54) **GUSSKÖRPER**
CASTING
CORPS COULE

(30) Priorität: 15.01.1994 DE 4401051
(43) Veröffentlichungstag der Anmeldung: 15.04.1998
(73) Patentinhaber: ITT Automotive Europe GmbH, 60488 Frankfurt am Main (DE)
(72) Erfinder: LÖSCH, Dieter, D-97999 Igersheim (DE); HEUBERGER, Christof, D-71672 Marbach (DE)
(74) Vertreter: Dreiss, Fuhlendorf, Steimle & Becker
(86) Internationale Anmeldenummer: EP9500139
(87) Internationale Veröffentlichungsnummer: WO9519507

(56) Entgegenhaltungen:
- DE-A- 3 103 868
- DE-U- 8 911 391
- FR-A- 2 031 653
- US-A- 3 873 056
- US-A- 4 208 075
- PATENT ABSTRACTS OF JAPAN vol. 14 no. 405 (P-1100) ,31.August 1990 & JP,A,02 156469 (SANKYO SEIKI) 15.Juni 1990,

## Beschreibung

Die Erfindung bezieht sich auf einen Gußkörper mit einem Durchbruch, der sich in axialer Richtung erstreckt und der zur Aufnahme einer Welle oder Achse dient, und mit zwei Gleitlagern an den Enden des Durchbruches, wobei die Gleitlager einstückig mit dem Gußkörper ausgebildet sind. Derartige Gußkörper sind z.B. aus dem Dokument FR-A-2 031 653, das den Oberbegriff des Anspruchs 1 bildet, bekannt. Sie werden sowohl aus metallischen Stoffen als auch aus Kunststoffen hergestellt. Im ersteren Fall werden zur Herstellung Druckgußverfahren angewandt, im zweiten Fall Spritzgußverfahren. Bei diesen Verfahren werden nichtzerstörbare Formen eingesetzt, die es erforderlich machen, daß die zu gießenden Gußkörper eine relativ einfache Struktur aufweisen. Vor allem müssen Hinterschneidungen vermieden werden. Um Durchbrüche für Wellen und Achsen im Material freizuhalten, werden Kernstücke eingesetzt. Die Form der Kernstücke muß einfach sein, damit sie nach dem Gießvorgang leicht aus dem Gußkörper gelöst werden können.

Zylindrische Kernstücke können nicht eingesetzt werden, da das Kernstück nur schwer aus dem Gußkörper herausgezogen werden kann. Zwischen der Mantelfläche des zylindrischen Kernstücks und der Innenwandung des Gußkörpers treten beim Herausziehen des Kernstücks nämlich erhebliche Reibungskräfte auf. Aus diesem Grund ist es nicht möglich, einen Gußkörper mit einem Durchbruch für eine Welle zu schaffen, die im Gußkörper an zwei Stellen von Gleitlagern mit gleichen Durchmessern gelagert ist.

Man ist in diesen Fällen dazu übergegangen, die Welle stufig auszubilden, und im Durchbruch des Gußkörpers zwei Lager mit unterschiedlichen Durchmessern vorzusehen. Der Übergangsbereich zwischen den Lagern ist konisch geformt, so daß das entsprechende konisch geformte Kernstück leicht aus dem Gußkörper gelöst werden kann. Durch einen leichten Ruck in axialer Richtung löst sich die konische Oberfläche des Kerns von der konisch geformten Innenfläche des Gußkörpers.

Diese Vorgehensweise bedingt aber die Herstellung einer gestuften Welle. Dies ist mit erhöhten Kosten verbunden. Für einige Anwendungsbereiche ist aber schon eine leichte Kostenerhöhung nicht akzeptabel.

Die Erfindung beruht daher auf der Aufgabe, einen Gußkörper der obengenannten Art so auszubilden, daß eine Welle mit gleichbleibendem Querschnitt gelagert werden kann, wobei der Kern, der zum Gießen des Gußkörpers benötigt wird, nach dem Gießvorgang leicht aus dem Gußkörper gelöst werden kann.

Dazu schlägt die Erfindung vor, daß ein Gußkörper der obengenannten Art Gleitlager aufweist, die aus mehreren voneinander beabstandeten Gleitkörpern bestehen, die im Querschnitt zylinderringsegmentförmig sind, wobei die Gleitkörper des einen Lagers gegenüber den Gleitkörpern des anderen Lagers in Umfangsrichtung versetzt sind und wobei jeweils die Gleitkörper des einen Lagers und die ihnen axial gegenüberliegenden Unterbrechungen zwischen zwei Gleitkörpern des anderen Lagers in Umfangsrichtung den selben Öffnungswinkel aufweisen. Die Innenflächen der Zylinderringsegmente bilden das Gleitlager für die Welle bzw. für die Achse, wobei die Innenflächen beider Gleitlager jeweils auf Kreisen liegen, die den gleichen Durchmesser aufweisen.

Die versetzte Anordnung der Zylinderringsegmente der beiden Lager ermöglicht es, daß der Bereich zwischen den Lagern so gestaltet werden kann, daß sich ein entsprechend geformtes Kernstück leicht aus dem Gußkörper lösen kann.

Dazu ist es notwendig, daß sich die Winkelbereiche, in denen sich die Zylinderringsegmente befinden, nicht überschneiden. Der Durchbruch im Bereich zwischen den Lagern wird nun entsprechend der Winkelaufteilung der Gleitkörper in Umfangsabschnitte unterteilt. Dabei verläuft jeder Abschnitt in axialer Richtung verjüngend zu der Seite, auf der sich im jeweiligen Umfangsabschnitt ein Gleitkörper befindet.

Anders ausgedrückt, ein Abschnitt der Innenseite des Zwischenbereichs im Durchbruch endet auf der einen Seite jeweils in einer Unterbrechung zwischen zwei Lagersegmenten und auf der anderen Seite in einem Lagersegment. Auf der einen Seite entspricht der Abstand des Abschnitts zur Lagerachse dem Durchmesser der Unterbrechung zwischen zwei Lagersegmenten, während auf der anderen Seite der Abstand des Abschnitts zur Lagerachse dem Durchmesser der Innenfläche eines Zylinderringsegments entspricht.

Vorzugsweise ist auf der zuletzt genannten Seite der Abstand des Abschnittes zur Lagerachse ein wenig größer als der Innendurchmesser des Lagersegments, so daß der Übergang stufig erfolgt.

Ein Kernstück für eine Gußform zur Herstellung eines derartigen Gußstückes besteht vorzugsweise aus zwei Teilstücken, die ineinandersteckbar sind.

Jedes Teilstück oder Schieber besteht aus einem ersten zylindrischen Bereich, der Vertiefungen aufweist, die den Zylinderringsegmenten der Lager entsprechen. Daran schließt sich ein zweiter Bereich an, der weitere Ausnehmungen aufweist, in die die entsprechenden Gegenstücke des anderen Schiebers einsteckbar sind.

Die Seitenwände, die die weiteren Ausnehmungen jeweils in Umfangsrichtung begrenzen, fluchten in axialer Richtung mit den Wänden für die Ausnehmungen der Zylinderringsegmente.

Da weiterhin die Ausnehmungen in beiden Bereichen ineinander übergehen, hat dies zur Folge, daß das entsprechende Gegenstück des anderen Schiebers, nachdem die Schieber zusammengesteckt sind, eine Wand der Ausnehmung im ersten Bereich bildet.

Die nach außen weisende Oberfläche des zweiten Bereichs eines jeden Schiebers läuft konisch verjüngend in Richtung auf das Ende des Schiebers zu, das vom ersten Bereich abgewandt ist. Dies entspricht der beabsichtigten konischen Verjüngung in den entsprechenden Abschnitten im Übergangsbereich des Gußkörpers zwischen den Lagern.

Die Ausnehmungen im zweiten Bereich und die zugehörigen Gegenstücke im zweiten Bereich des anderen Schiebers sind so zueinander ausgebildet, daß sich nach dem Zusammenschieben der Schieber im Übergangsbereich eine kompakte Einheit bildet, wobei in den jeweils ersten Bereichen der Schieber lediglich die Ausnehmungen verbleiben, die zur Ausbildung der Lagerringsegmente benötigt werden.

Die Erfindung soll im folgenden anhand eines Ausführungsbeispiels näher erläutert werden.

Es zeigen:
- Figur 1: in einer stark stilisierten Form einen Längsschnitt durch einen Gußkörper, entlang der Linie I-I aus Figur 2 ,
- Figur 2: einen Querschnitt entlang der Linie II-II aus Figur 1,
- Figur 3: in perspektivischer Sicht ein zweiteiliges Kernstück sowie einen Längsschnitt durch den Gußkörper.
- Figur 4: einen Querschnitt entlang der Linie IV-IV aus Figur 3,

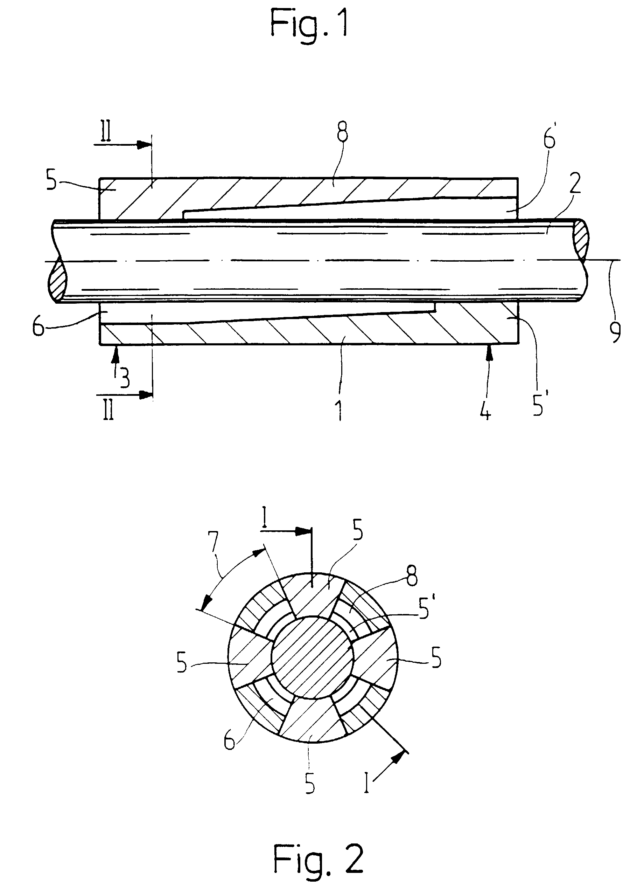

In Figur 1 ist mit 1 ein Gußkörper bezeichnet, mit 2 eine Welle, die in diesem Gußkörper gelagert ist. Dazu ist an dem einen Ende des Gußkörpers 1 ein Lager 3 und am anderen Ende des Gußkörpers 1 ein Lager 4 vorgesehen. Bei beiden Lagern handelt es sich um Gleitlager, die gleich aufgebaut sind. Wie der Querschnitt in der Figur 2 zeigt, ist der Lagerring nicht durchgehend, sondern unterbrochen. Ein Lager besteht somit aus einzelnen Lagerstücken 5, 5', die jeweils aus einem Zylinderringsegment gebildet sind. Zwischen den Lagerstücken 5, 5' sind Unterbrechungen 6, 6' vorgesehen, deren Querschnitte ebenfalls Kreisringsegmente bilden. Die Öffnungswinkel 7 der Segmente sind sowohl für die Lagerstücke 5 als auch für die Unterbrechungen 6 gleich groß und gleichmäßig über den Umfang verteilt. Im Ausführungsbeispiel sind vier Lagerstücke, die durch vier Unterbrechungen, voneinander getrennt sind, vorgesehen.

Die Lager 3 und 4 sind zwar gleich aufgebaut, aber derart gegeneinander versetzt, daß in dem Winkelbereich, in dem bei dem einen Lager 3 ein Lagerstück 5 vorgesehen ist bei dem anderen Lager 4 eine Unterbrechung 6' vorliegt und umgekehrt.

Der Abschnitt 8 zwischen den Lagern, der auch als Aus formbereich bezeichnet werden kann, ist wie folgt gestaltet. Zu betrachten sind jeweils Umfangsabschnitte, die sich von einem Lager zum anderen Lager erstrecken, wobei die Breite eines Abschnittes in Umfangsrichtung der Winkelbreite eines Lagerstücks bzw. der korrespondierenden Unterbrechung des anderen Lagers entspricht. Jeder Abschnitt verläuft unter einem Winkel zur Lagerachse 9 und zwar derart, daß der Abstand zur Lagerachse an dem Ende, an dem sich ein Lagerstück 5 befindet, kleiner ist, als an dem Ende an den der Abschnitt in eine Unterbrechung 6 übergeht.

Diese Anordnung hat zur Folge, daß von Umfangsabschnitt zu Umfangsabschnitt die Winkellage der Oberfläche mal in die eine mal in die andere Richtung zur Rotationsachse 9 kippt.

Einen derartig geformten Durchlaß eines Gußkörpers erhält man durch ein zweitteiliges Kernstück. Jedes Teil des Kernstücks weist einen Ausformungsbereich auf, der konisch ausgebildet ist und jeweils den Umfangsabschnitt im Gußkörper ausbildet, der sich in Auszugsrichtung konisch erweitert. Jedes Teil des Kernstücks kann daher nach dem Gießen zu der entsprechenden Seite des Durchbruchs herausgezogen werden.

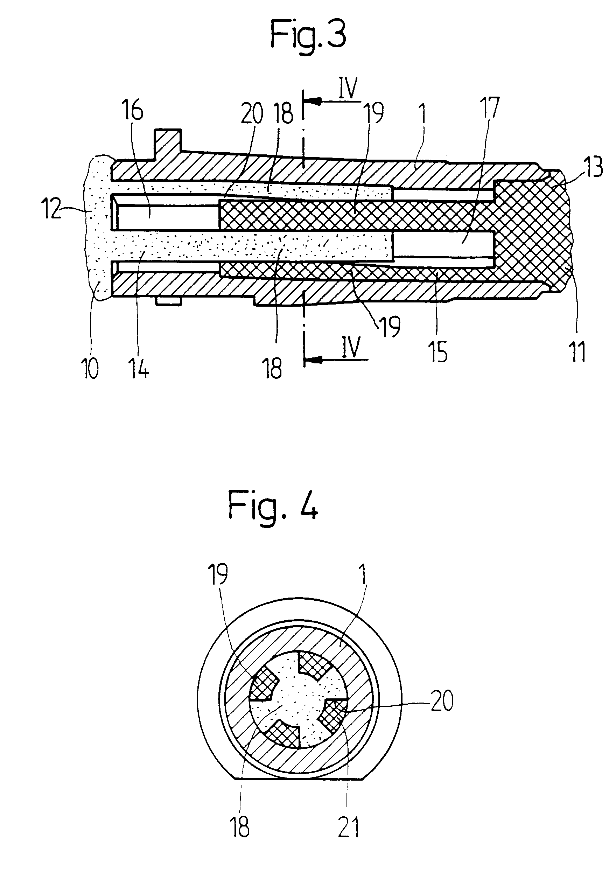

In der Figur 3 ist ein Kernstück bestehend aus zwei Schiebern 10 und 11 in einem geschnitten dargestellten Gußkörper 1 dargestellt.

Die Schieber 10 und 11 weisen jeweils einen Kopf 12, 13 auf. Am Kopf schließt sich ein Zylinderbereich 14 bzw. 15 an, der Vertiefungen 16, 17 aufweist, die entsprechend den zu gießenden Lagerstücken zylinderringsegmentförmig sind.

Während die außenliegende Oberfläche der Schieber gepunktet bzw. kreuzschraffiert dargestellt ist, sind der jeweilige Boden und die Wände der Vertiefung ohne Schraffierung.

Der jeweils zweite Abschnitt 18, 19 der Schieber 10, 11 läuft konisch nach außen hin zu und weist im Falle des Schiebers 10 Ausnehmungen 20 auf, die in der Verlängerung der Ausnehmungen 16 im ersten Abschnitt 14 liegen.

Der zweite Abschnitt 18 des ersten Schiebers besteht im wesentlichen aus einem massiven Körper, an dessen Außenrand die zylinderringsegmentförmigen Ausnehmungen 20 vorgesehen sind.

Dementsprechend besteht der zweite Abschnitt 19 des zweiten Schiebers 11 aus einzelnen sich axial erstreckenden Füßen 21, die im Schnitt ringsegmentförmig sind und die in ihren Abmessungen in die Ausnehmungen 20 des ersten Schiebers 10 hineinpassen.

Betrachtet man einen Schnitt entlang der Linie IV-IV in der Figur 3, so erhält man die Figur 4, wobei deutlich wird, daß der zweite Abschnitt 18 des Schiebers 10 im wesentlichen massiv ist und am Außenrand Ausnehmungen 20 aufweist, während der zweite Abschnitt 19 des zweiten Schiebers 11 entsprechend geformte Füße 21 aufweist.

Zum Gießen des Gußkörpers werden die beiden Schieber 10, 11 zusammengesteckt, so daß ein einheitlicher Kern entsteht, der an seinen Enden Vertiefungen 16, 17 für die auszubildenden Lagerstücke 5 aufweist und der in seinem Mittelteil im wesentlichen massiv ist, wobei abschnittsweise die Neigungen der Wandungen gegeneinander gekippt sind.

Beim Gießvorgang werden die Vertiefungen 16, 17 in den ersten Abschnitten 14, 15 gefüllt. Es entstehen die Gleitstücke.

Der Kern wird entnommen, indem jeder Schieber 10, 11 zur einen bzw. zur anderen Seite herausgezogen wird. Dabei zerfällt der Kern wieder in seine Teile. Jeder Schieber läßt sich leicht lösen, da die Oberflächenkontur seines zweiten Abschnitts passend geneigt ist. Die entsprechenden Stücke werden durch die Unterbrechungen zwischen den Lagerstücken hindurchgezogen.

## Patentansprüche

1. Gußkörper mit einem Durchbruch, der sich in axialer Richtung erstreckt und der zur Aufnahme einer Welle oder Achse dient, und mit zwei Gleitlagern (3, 4) an den Enden des Durchbruches, wobei die Gleitlager einstückig mit dem Gußkörper ausgebildet sind, dadurch **gekennzeichnet,** daß jedes Gleitlager aus mehreren voneinander beabstandeten Gleitkörpern (5, 5') besteht, die im Querschnitt zylinder-ringsegmentförmig sind, wobei die Gleitkörper (5) des einen Lagers gegenüber den Gleitkörpern (5') des anderen Lagers in Umfangsrichtung versetzt sind, und daß jeweils die Gleitkörper (5, 5') des einen Lagers (3, 4) und die ihnen axial gegenüberliegenden Unterbrechungen (6', 6) zwischen zwei Gleitkörpern (5', 5) des anderen Lagers (4,3) in Umfangsrichtung den selben Öffnungswinkel (7) aufweisen.

2. Gußkörper nach Anspruch 1, dadurch **gekennzeichnet,** daß der Durchbruch im Bereich (8) zwischen den Lagern (3, 4) entsprechend der Winkelaufteilung der Gleitkörper in Umfangsabschnitte unterteilt ist, wobei jeder Umfangsabschnitt in axialer Richtung verjüngend zu der Seite verläuft, in der sich im jeweiligen Umfangsabschnitt ein Gleitkörper (5, 5') befindet.

3. Gußkörper nach Anspruch 2, dadurch **gekennzeichnet,** daß der Abstand eines Umfangsabschnittes zur Lagerachse (9) im Übergangsbereich zu einem Gleitkörper (5,5') etwas größer ist als der Innendurchmesser des Lagers.

4. Kernstück zur Herstellung eines Gußstückes nach den Ansprüchen 1 bis 3 mit den Merkmalen,
- daß das Kernstück aus zwei Teilstücken (10, 11) besteht, die ineinandersteckbar sind,
- daß jedes Teilstück (10, 11) aus einem ersten zylindrischen Bereich (14, 15), der Vertiefungen (16, 17) aufweist und aus einem zweiten Bereich (18, 19) besteht, der Ausnehmungen (20) aufweist, in die die entsprechenden Gegenstücke des anderen Teilstücks einsteckbar sind
- daß die nach außen weisende Oberfläche des zweiten Bereichs (18, 19) eines jeden Teilstücks (10, 11) konisch verjüngend zuläuft und zwar in Richtung auf das Ende des Teilstücks, das vom ersten Bereich abgewandt ist, und
- daß der zweite Bereich (18) des einen Teilstücks (10) Ausnehmungen aufweist, in die entsprechende Gegenstücke (21) des anderen Teilstücks (11) einsteckbar sind.

## Claims

1. Cast element with an opening extending in the axial direction and which is used to hold a shaft or axle, and with two friction bearings (3, 4) at the ends of the opening, whereby the friction bearings are formed as a single piece with the cast element, characterized in that each friction bearing consists of several mutually spaced friction bearings (5, 5') which have a cross section shaped like a cylindrical ring segment, whereby the slide elements (5) of the one bearing are offset in the perimeter direction with respect to the slide elements (5') of the other bearing and that the slide elements (5, 5') of the one bearing (3, 4) and the openings (6, 6') located axial opposite are positioned between two slide elements (5', 5) of the other bearing (4, 3) have the same opening angle (7) in circumferential direction.

2. Cast element according to Claim 1, characterized in that the opening is divided in the region (8) between the bearings (3, 4) corresponding to the angular division of the slide elements in the perimeter sectors, whereby each perimeter sector runs in an axial direction tapered to the side in which a slide element (5, 5') is located in the particular perimeter sector.

3. Cast element according to Claim 2, characterized in that the distance of one perimeter sector to the bearing axis (9) in the transition region to one slide element (5, 5') is somewhat greater than the inside diameter of the bearing.

4. Core piece for the manufacture of a cast piece according to Claims 1 to 3, having the features
- that the core piece consists of two partial pieces (10, 11) which can be inserted into each other,
- that each partial piece (10, 11) consists of a first cylindrical region (14, 15), having recesses (16, 17), and of a second region (18, 19), having recesses (20), into which the corresponding counterpieces of the other partial piece can be inserted,
- that the outward-facing surface of the second region (18, 19) of each partial piece (10, 11) is conically tapered and runs in the direction toward the end of the partial piece which is facing away from the first region,
- that the second region (18) of the one partial piece (10) has recesses, into which the corresponding counterpieces (21) of the other partial piece (11) can be inserted.

## Revendications

1. Corps moulé comportant un passage, qui s'étend suivant la direction axiale et qui sert à recevoir un arbre ou un essieu, et deux paliers lisses (3, 4) situés aux extrémités du passage, les paliers lisses étant réalisés d'une seule pièce avec le corps moulé, caractérisé en ce que chaque palier lisse est constitué de plusieurs éléments de palier lisse (5, 5') espacés l'un de l'autre et en forme de segment d'anneau cylindrique en section transversale, les éléments de palier lisse (5) d'un premier palier étant décalés suivant la direction circonférentielle par rapport aux éléments de palier lisse (5') de l'autre palier et en ce que, pour chaque palier, les éléments de palier lisse (5, 5') d'un premier palier (3, 4) et les interruptions (6', 6), situées entre deux éléments de palier lisse (5', 5) de l'autre palier (4, 3), qui leur font face axialement présentent le même angle d'ouverture (7) suivant la direction circonférentielle.

2. Corps moulé suivant la revendication 1, caractérisé en ce que, dans la zone (8) située entre les paliers (3, 4), le passage est divisé en sections circonférentielles conformément à la division angulaire des éléments de palier lisse, chaque section circonférentielle allant en rétrécissant suivant la direction axiale vers le côté où un élément de palier lisse (5, 5') se trouve dans la section circonférentielle correspondante.

3. Corps moulé suivant la revendication 2, caractérisé en ce que la distance d'une section circonférentielle à l'axe de palier (9) dans la zone de transition avec un élément de palier lisse (5, 5') est légèrement plus grande que le diamètre intérieur du palier.

4. Noyau pour la fabrication d'une pièce moulée suivant les revendications 1 à 3, comportant les particularités consistant
- en ce que le noyau est constitué de deux pièces partielles (10, 11) qui sont emboîtables l'une dans l'autre,
- en ce que chaque pièce partielle (10, 11) est constituée d'une première zone cylindrique (14, 15), qui comporte des parties creuses (16, 17), et d'une seconde zone (18, 19) teint qui comporte des évidements (20) dans lesquels les parties complémentaires correspondantes de l'autre pièce partielle sont emboîtables,
- en ce que la surface tournée vers l'extérieur de la seconde zone (18, 19) de chaque pièce partielle (10, 11) va en rétrécissement d'une manière conique, plus précisément en direction de l'extrémité de la pièce partielle qui est située à l'opposé de la première zone, et
- en ce que la seconde zone (18) d'une première pièce partielle (10) comporte des évidements dans lesquels des parties complémentaires correspondantes (21) de l'autre pièce partielle (11) sont emboîtables.
